# EUROPEAN PATENT SPECIFICATION

(11) **EP 2 383 946 B1**
(45) Date of publication and mention of the grant of the patent: **13.06.2018**
(21) Application number: 09836048.0
(22) Date of filing: 28.12.2009
(51) Int. Cl.: H04L 12/58, H04L 29/06

(54) **METHOD, SERVER AND SYSTEM FOR PROVIDING RESOURCE FOR AN ACCESS USER**
VERFAHREN, SERVER UND SYSTEM ZUR RESSOURCENBEREITSTELLUNG AN EINEN ZUGANGSNUTZER
PROCÉDÉ, SERVEUR ET SYSTÈME DE FOURNITURE DE RESSOURCES POUR UN UTILISATEUR D'ACCÈS

(30) Priority: 31.12.2008 CN 200810242210
(43) Date of publication of application: 02.11.2011
(73) Proprietor: Huawei Technologies Co., Ltd., Longgang District Shenzhen, Guangdong 518129 (CN)
(72) Inventor: SUN, Qian, Shenzhen Guangdong 518129 (CN); HU, Lixin, Shenzhen Guangdong 518129 (CN); TAN, Donghui, Shenzhen Guangdong 518129 (CN)
(74) Representative: Pfenning, Meinig & Partner mbB
(86) International application number: PCT/CN2009/076141
(87) International publication number: WO 2010/075761

(56) References cited:
- CN-A- 101 039 284
- CN-A- 101 103 354
- CN-A- 101 159 714
- US-A1- 2003 135 755
- US-A1- 2007 061 730
- DANIEL K ET AL: "Interoperable Role-Based Single Sign-On-Access to Distributed Public Authority Information Systems", TECHNOLOGIES FOR HOMELAND SECURITY, 2008 IEEE CONFERENCE ON, IEEE, PISCATAWAY, NJ, USA, 12 May 2008 (2008-05-12), pages 327-332, XP031266616, ISBN: 978-1-4244-1977-7
- TOOTOONCHIAN AMIN ET AL: "Lockr: Social Access Control for Web 2.0", WOSN'08, 18 August 2008 (2008-08-18), pages 43-48, XP002670718, Seattle, Washington, USA

## Description

### FIELD OF THE INVENTION

The present invention relates to a socialized network, and in particular, to a method, an application website server, a Social Network Site (SNS) server, an Open Identity (OpenID) Provider (OP), and a system for providing resources for an accessing user in a distributed socialized network.

### BACKGROUND OF THE INVENTION

An SNS is a network virtual social network established on a basis of the social network relation concept. The domestic and international SNSs such as Myspace, Facebook, Kaixin.com, and Renren.com already become a part of daily life of more and more people. Currently, many traditional Internet portals and Telecom operators have launched the SNS service one after another, and furthermore, a large quantity of various applications provided for SNS platform users appear; in the meantime, problems including interconnections among the social networks and application resource sharing become increasingly severe. At present, the major related technologies include the protocols such as OpenID and an Open Authentication (OAuth).

The OpenID is a user-centered digital identity recognition framework, and is characterized by openness, distributiveness, and freedom. Specific terms and specifications of the OpenID can be referred to materials on the official website (www.openid.net). As for websites supporting the OpenID, a user does not need registration on each website to obtain conventional authentication marks such as a user name and a password. Instead, the user only needs to register with a website serving as an OP in advance, so the user is able to use one OpenID to sign on various websites. The OpenID is decentralized, and any website may use the OpenID as a manner for the user to sign on, and any website can serve as an OP. The OpenID solves the problems and requires no central website to confirm the digital identity. The OpenID is adopted by more and more websites. The OAuth protocol is used so that a website and an application program are able to access a certain protected resource through an Application Programming Interface (API) without revealing of an authentication certificate (for example, a password) by the user.

In order to completely realize interconnections and the resource sharing in the social networks, relying on the OpenID and the OAuth protocols only are insufficient currently. Identities of the user and friends or group members of the user may belong to different OPs, and one user may respectively create some groups in different websites, and perform an access authorization of resources sharing on some groups in some other application websites. In an environment of such a distributed social network, not only the identity of the user requires cross-site authentication, but also a group member identity of the user requires reliable authentication, so as to ensure the security of the resource sharing.

### SUMMARY OF THE INVENTION

An embodiment of the present invention provides a method for providing resources for an accessing user, where the method includes: accepting, by the application website server, a user to sign on by using an Open Identity (OpenID) through a browser, determining, by the application website server, a corresponding OpenID Provider (OP) according to the OpenID of the user, wherein the OP of the user stores information of a website of a group having the user as a member; requesting, from the OP of the user to an Social Network Site (SNS), obtaining the information of the group having the user as the member; after the OP of the user obtains signed group information from the SNS of the group having the user as the member, receiving, by the application website server, the signed group information forwarded by the OP of the user; authenticating, by the application website server, a group member identity of the user according to the group information; and providing, by the application website server, resources for the user according to the authentication result.

An embodiment of the present invention provides an application website server, where the application website server includes: a resource data providing unit, configured to store resources; a resource access authorization setting unit, configured to store a resource access authorization record, where the resource access authorization record stores a corresponding relation between a group identity and the resources; a sign-on unit, configured to receive sign-on information of a user including an identity of the user; and an application (APP) processing unit, configured to obtain group information of the user according to the identity of the user, where the group information is configured to authenticate a group identity, and provide the resources for the user according to the authentication result; wherein the sign-on information of the user received by the sign-on unit comprises an Open Identity (OpenID) of the user; and the APP processing unit obtains the group information of the user from a corresponding OpenID Provider (OP) according to the OpenID of the user, authenticates a group member identity of the user according to the group information, and provides the resources for the user according to the authentication result and the resource access authorization record; and the step of the obtaining the group information of the user from the OP of the user comprises: requesting, from the OP of the user, obtaining the information of the group having the user as the member; and after the OP of the user obtains signed group information from the website of the group having the user as the member, receiving the signed group information forwarded by the OP of the user.

An embodiment of the present invention provides a system for accessing resources in a socialized network, where the system includes: an application website server of claim 6, an OpenID Provider (OP), and an SNS server, wherein the OP includes: a group information storage unit, configured to store the group information of the user; and a group information providing unit, configured to return the group information of the user stored by the group information storage unit when a request for obtaining the group information of the user is received, the SNS server includes: a group information providing unit, configured to store group information of a user; and an SNS processing unit, configured to authenticate a member identity of the user according to the group information when a request for authenticating the member identity of the user is received, wherein the SNS processing unit is further configured to update the group information of the user stored by the group information providing unit when a request for adding or deleting a member in the group is received, and obtain the group information of the corresponding user from the group information providing unit and return the group information to a requesting party when a request for querying the group information of the user is received.

Based on the above description, according to the embodiments of the present invention, in an environment of a distributed social network, the convenience and security of resource sharing are realized through reliable authentication of the group member identity of the user through the website of the group. Particularly, current application resources and relation data of the user are usually scattered at different websites on the Internet, and the present invention breaks barriers in the sharing of the resources and the relation data among different websites, thereby greatly facilitating the development of Internet services.

### BRIEF DESCRIPTION OF THE DRAWINGS

FIG. 1 is a flow chart of message interaction of adding a group member by a user according to Embodiment 1 of the present invention;
FIG. 2 is a flow chart of message interaction of accessing resources of an application website server by a user b according to Embodiment 1 of the present invention;
FIG. 3 is a flow chart of message interaction of accessing resources of an application website server by a user b according to Embodiment 2 of the present invention;
FIG. 4 is a flow chart of message interaction of accessing resources of an application website server by a user b according to Embodiment 3 of the present invention;
FIG. 5 is a flow chart of message interaction of accessing resources of an application website server by a user b according to Embodiment 4 of the present invention;
FIG. 6 is a structural view of an application website server according to Embodiment 5 of the present invention.
FIG. 7 is a structural view of an SNS server according to Embodiment 6 of the present invention;
FIG. 8 is a structural view of an SNS server according to Embodiment 7 of the present invention;
FIG. 9 is a structural view of an OP according to Embodiment 8 of the present invention;
FIG. 10 is a structural view of an OP according to Embodiment 9 of the present invention;
FIG. 11 is an architectural diagram of a system for enabling a user to access resources of an application website server by a user according to Embodiment 10 of the present invention; and
FIG. 12 is an architectural diagram of a system for enabling a user to access resources of an application website server according to Embodiment 11 of the present invention.

### DETAILED DESCRIPTION OF THE EMBODIMENTS

All website service providers including socialized data of a user may be referred to as a socialized network site or an SNS, and the socialized data (or referred to as social data, or SNS data in short) mainly includes data such as personal information, contacts, groups, and activity information of the user. According to the embodiments of the present invention, a method for sharing resources in a distributed socialized network system is described. In order to enable the user to conveniently sign on and access a plurality of independent SNSs, and associate the SNS data stored in a distributed manner, in the embodiments of the present invention, an OpenID is preferentially adopted as an identity of the user.

An OP may only store basic personal information of the user, such as electronic mail (e-mail), birthday, and gender, and may also store complex SNS data such as contacts, groups, and activity information; and of course, the OP may even be used for only identity authentication of the user. Generally, all large-scale SNSs may serve as OPs and are responsible for the identity authentication of the user to verify that the user owns a certain identity and at the same time various SNS data of the user is stored. According to the embodiments of the present invention, in the distributed socialized network system, it is assumed that an OP corresponding to a user a is a website OP-A, and an OP corresponding to a user b is a website OP-B, Group-C-a of the user a exists in another SNS-C, and members of the group includes the user b. Groups including the member user b may also exist in other SNSs, that is, the group having the user b as the member may be distributed in a plurality of different SNSs. The website capable of storing the user group may be referred to as a group server.

Generally, the user may categorizes the contacts into a plurality of groups, which are private groups, such as a colleague group, a classmate group, and a family group, and the members of the groups may be overlapped, that is, a contact may belong to a plurality of groups of the user at the same time. Furthermore, a special group, for example, a "my friends" group, is used for representing all contacts of the user at a website, so when resource access authorization is performed for the group, if the user expects all contacts to access the resources of the user, the special group "my friends" may be used for authorization. Furthermore, a public group such as class contacts, a QQ group or an MSN group may further exist, so the group members may use the group and perform resource access authorization on the group.

Resource data such as photos, videos, website collection, reviews, journals, presence information or location information of the user a is stored in an application website server. Authorization data of the user a for Group-C-a is further stored in the application website server, for example, the members of Group-C-a are allowed to access the resource data of the user a in the application website server. According to the embodiments of the present invention, for simplicity, description of a part of the steps is omitted, for example, a process of browser redirection performed by signing on the website through the OpenID. According to the present invention, the mentioned websites practically correspond to server entities to provide web pages and other Internet services for the user, and the processing of various specific processes of the website is completed by the corresponding server.

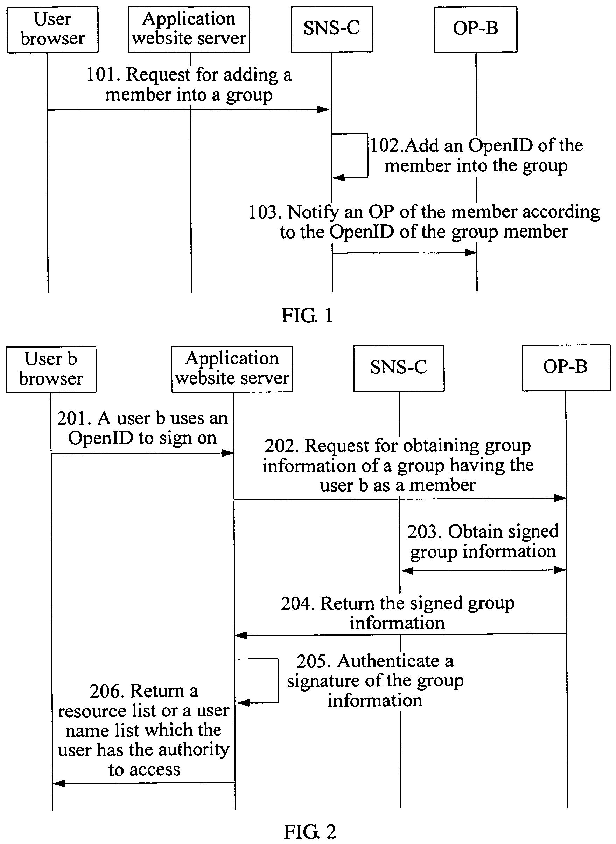

According to Embodiment 1 of the present invention, a processing process of adding a group member by a user is first described. Referring to FIG. 1, the method mainly includes the following steps.

In step 101, an SNS server SNS-C receives a request for adding a member into the group. Generally, the user triggers step 101, for example, after a user a signs on the SNS-C by using an OpenID (for example, http://openid-usera.example.com), the user a requests to add a user b as a group member in a self-owned group such as Group-C-a in the SNS-C through a browser. Usually, the group information correspondingly includes a group identity and a member list, and the group identity is generally unique in a whole distributed socialized network, which may be ensured by including a domain name of the website of the group in the group identity. The group information may further include information such as a group name and description.

In addition to being triggered by the user a, other users having authority or applications may also add a member into the group of the user a.

In step 102, the SNS-C adds the member into the group. For example, the member user b is added into Group-C-a, that is, an OpenID and other information of the user b are added into the member list of the group. In other embodiments of the present invention, in addition to adding group members one by one, contacts may also be imported into a group in batch. The member list of the group includes the OpenID of the member, such as the OpenID of the user b (for example, http://openid-userb.example.net), and may further include information such as a name, a nickname, and contact information of the member.

In step 103, the SNS-C notifies an OP of the group member. In addition to member addition, other group events such as member deletion may also be notified to the OP of the involved group members. For example, when the member user b is added into or deleted from Group-C-a, an OP website OP-B of the user b is notified. The corresponding OP may be determined according to the OpenID of the group member, and then the SNS-C notifies the group event that occurs, such as the member addition or deletion to the corresponding OP, and the group event notification may also include the group event information such as the OpenID of the member and the event type.

The OP-B may obtain that the user is the member of a certain group on the SNS-C according to the group event notification. The group event notification may not include a specific group identity. In this way, the OP-B does not have to accurately learn which group the user belongs to as a group member, so the SNS-C also does not need to notify the OP-B each time the user member b is added. Specifically, when the member user b is added, it may be judged whether the user b is already a member of another group in the SNS-C, if not, the group event notification is sent to the OP-B, and if yes, the group event notification is not sent. When the member is deleted, it may also be judged whether the user b is a member of another group in the SNS-C, if not, the group event notification is sent to the OP-B, and if yes, the group event notification is not sent. The OP-B may learn whether the SNS-C includes the member user b within the scope of all groups and does not need to send the notification each time.

Specifically, the group event notification service provided by the OP may be found through the Yet Another Decentralized Identity Interoperability System (Yadis) Protocol. The corresponding eXtensible Resource DescriptorS (XRDS) documents are as follows, for example,

```
          <Service xmlns="xri://$xrd*($v*2.0)">
          <Type>http://specs.openid.net/auth/3.0/group_notify</Type>
          <URI>http://provider.example.com/group_notify</URI>
          </Service>
```

The SNS-C sends a Hypertext Transport Protocol (HTTP) GET or POST request message to a service address, for example, http://provider.example.com/group_notify of the group event notification provided by the OP, where the message includes the group event information. The request message may include the following fields:
group_event_type, having a group event type as a value, such as types of add and delete; and
member_id, having an OpenID as a value indicating the identity of the added or deleted member in the message.

Optionally, the request message may include group_host having a Uniform Resource Locator (URL) as a value indicating the address of the website server of the group. The OP may obtain the specific group information of the user at this address. If the request message does not include this field, the OP may determine the address of the website server of the group according to an Internet Protocol (IP) address of the requesting party or a From field in the HTTP request.

If the request, sent by the OP-B to the SNS-C, for obtaining the group information includes the information of the application website server, activity information of the user may be exposed to the SNS-C, for example, the SNS-C may provide the corresponding group information rather than the information of all groups of the user b for the OP-B according to the information of the application website server. If a malicious website adds the user into groups of the website without confirmation of the user and performs resource authorization on the groups at some other application websites, when the user uses the activity of the application website, the user may be exposed as the user needs authentication of the group member identity at the malicious website, which is not good for privacy protection of the user.

Therefore, the security may be improved through the following confirmation step. After the OP of the group member receives the group event notification, when the group member signs on the OP next time, the OP displays the received relevant notification to the group member and prompts the group member for confirmation. If the user does not trust the SNS-C, or believes that the SNS-C may be malicious (for example, the SNS-C may be used for spreading advertisement information or maliciously track the activity of the user), the user may reject to perform the confirmation operation. After the group member performs the confirmation operation, the OP of the group member sets a confirmation mark for the SNS-C. If subsequently the user does not trust the SNS-C any longer, the user may modify the confirmation mark into a rejection mark. The OP of the user only requests, from the website of the group confirmed by the user, obtaining the signed group information.

Alternatively, after the OP of the group member receives the group event notification, the OP sends a confirmation e-mail to the group member, and after the group member clicks the confirmation operation link in the e-mail, the OP of the group member sets the confirmation mark for the SNS-C.

Subsequently, in the application website server, Group-C-a may be authorized to access the resources of the user a. The authorization is usually initiated by the owner of the resources, for example, the user a. For example, a certain group may be authorized to access resources of a certain group of photos or location information of the user in the application website server. The authorized group is usually a self-owned group of the user a or a group having the user a as the member, but may be a group having no relation with the user a. The application website server stores a corresponding relation between the identity of the authorized group and the resources provided by the user a, that is, stores a resource access authorization record of the group.

In the following, a processing process that a user b accesses an application website server is described, and according to Embodiment 1 of the present invention, a manner of obtaining group information using an OP-B as a proxy is mainly described. Referring to FIG. 2, the following steps are included.

In step 201, the application website server accepts that the user b to sign on by using the OpenID.

In step 202, the application website server requests, from the OP-B, obtaining information of the group having the user b as a member. Specifically, the group information may be obtained through the HTTP POST or GET message, and the message includes a user identity field, for example, content of the field may be an OpenID of the user b.

In step 203, the OP-B requests, from the website of the group, for example, an SNS-C, obtaining the group information, where the group information includes a group list having the user b as the member. The SNS-C signs for the information of the group list, so as to ensure that the information is not tampered by the OP-B. If the user b is not only the member of the group on the SNS-C but also the member of groups at other websites, the OP-B obtains the signed group information of the user b from the websites one by one.

The OP-B can only learn at which websites the groups including the user b as the member are located according to the information obtained from a group event notification, but cannot obtain specific group identities, the application website requires the specific group identity to perform resource access authorization, so the OP-B requests, from the websites, obtaining the specific group identities. The specific request may use the messages such as HTTP POST, and the request message may include the following fields:
member_id, having the value as an OpenID indicating the identity of the member in the message;
group_list, having the value as a group identity list, where the user is the member of the groups;
response_nonce, indicating a random number, must include a time stamp and may also additional characters;
sign_type, indicating the type of a signature algorithm, such as the Public-Key Cryptography Standards (PKCS), where when the application website server requests, from the OP-B, obtaining the information of the group having the user b to be the member, the supported type of the signature algorithm may be carried, and then transferred to the SNS-C in the request of the OP-B, and the SNS-C uses the type of the signature algorithm supported by the application website server;
signed, indicating a signed filed list, including fields such as member_id, group_list, and response_nonce; and
sig, indicating data of the signed fields included in "signed" by using the algorithm indicated in sign_type.

The fields such as the group list and the signature together form the member identity authentication result, which may also be referred to as group authentication information.

In step 204, the OP-B returns the group information of the user b to the application website server. The group information includes information such as the group list and the signature of the user b.

In step 205, the application website server authenticates the signature of the group information. Specifically, a public key of a website, for example, the SNS-C may be used for the authentication. The group member identity of the user b may be confirmed after the authentication is successful, that is, it is confirmed that the user b is a member of a group in the group list.

In step 206, the application website server returns a resource list or a user name list that the user b has the authority to access to a browser of the user b.

The application website server may obtain a private resource list or a user name list of resource owners that the user has the authority to access by comparing a group identity (for example, Group-C-a authorized for resource access by a user a) in a resource access authorization record with the group identity (the group member includes the user b) in the group information obtained from the OP-B.

According to the solution in this embodiment, the application website does not need to authenticate the group member identity of the user by using the SNS-C. While the OP-B returns the group information, the application website server authenticates the signature by using the signature technical means, so the accuracy of the group information may be ensured, thereby improving the efficiency and ensuring the security. Especially, when the SNS-C and the OP-B are the same website or the websites in the same domain, the efficiency of this solution is higher than other solutions.

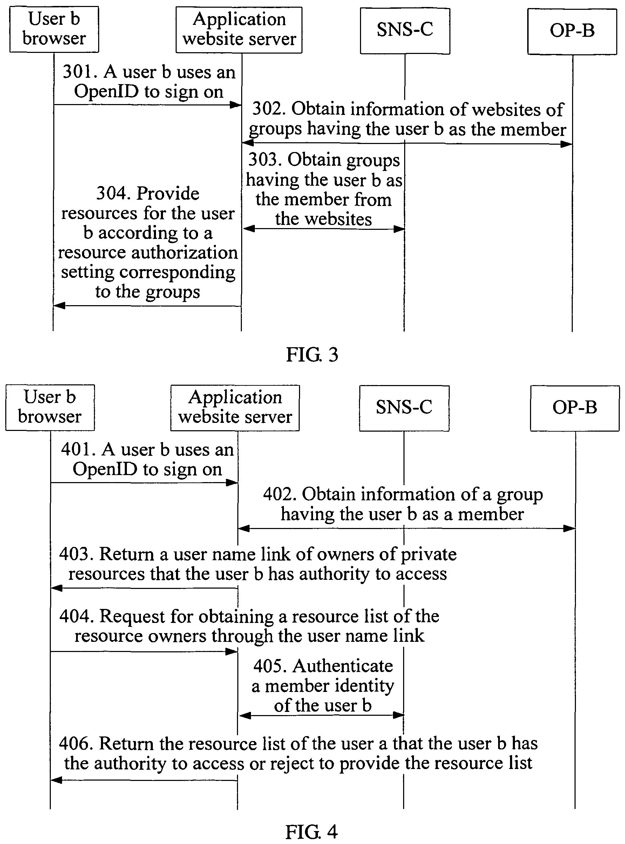

According to Embodiment 2 of the present invention, a manner that an application website server directly goes to a website such as an SNS-C to authenticate a group member identity of a user is mainly described. Referring to FIG 3, the following steps are included.

In step 301, the application website server accepts a user b to sing on by using an OpenID.

In step 302, the application website server requests, from an OP-B, obtaining group information, that is, the information of websites of groups having the user b as a member.

In step 303, the application website server obtains specific group identities of the groups having the user b as the member from the websites of the groups. The further obtained specific group identity is an authentication result, that is, the groups having the user b as the member are determined. In this manner, usually the application website server and the website of the group have a trust relationship; otherwise, the application website server may obtain the group information of the user for an illegal purpose. For example, the Security Assertion Markup Language (SAML) Protocol may be adopted to obtain the specific group identities of the groups having the user b as the member, and an HTTP POST message is used for bearing the specific group identities. The website of the groups having the user b as the member serves as an attribute of the user b, and the application website server requests attribute assertion of the user b by sending the HTTP POST message. The returned attribute assertion may include an OpenID of the user b and a group attribute of multiple values, and the group attribute is as follows, for example:

```
          <sam1:Attribute NameFormat="urn:oasis:names:tc:SAML:2.0:attrname-format:uri"
          Name="urn:oasis:names:tc:SAML:2.0:profiles:attribute:DCE:groups">
          <saml:AttributeValue xsi:type="dce:DCEValueType"
          dce:FriendlyName="Group-C-a">
          urn:uuid:008c6181-a288-10f9-b6d6-004005b13a2b
          </saml:AttributeValue>
          <saml:AttributeValue xsi:type="dce:DCEValueType"
          dce:FriendlyName="Group-C-a">
          urn:uuid:006a5a91-a2b7-10f9-824d-004005b13a2b
          </saml:AttributeValue>
          </saml:AttributeValue>
```

The group identity adopts a Universally Unique Identifier (UUID) format, so as to ensure the uniqueness of the group identity in a distributed environment.

In step 304, the application website server provides resources for the user b according to a resource access authorization record corresponding to the group identities.

According to Embodiment 3 of the present invention, if a group event, for example, group member addition occurs, a group event notification is sent each time and the group information in the notification further includes a specific group identity, an OP may approximately maintain group distribution information of a user on various websites through the information, that is, the OP may obtain a condition of the groups of the user through a group event notification mechanism even though the groups are distributed on various websites. Subsequently, the information of the group of the user may be provided for an application website.

A process that a user b accesses an application website server is mainly described in the following. Referring to FIG. 4, the following steps are included.

In step 401, the application website server accepts the user b to sign on by using an OpenID.

In step 402, the application website server obtains the information of the group having the user b as the member from an OP-B such as a group identity.

For example, the application website server may request, from the OP-B, obtaining the information of the group having the user b as the member through an OpenID attribute exchange method. The group identity attribute information included in a response message obtained through the OpenID attribute exchange method by the application website server may include:
openid.ax.value.group_as_member.1=Group-C-a.SNS-C.com
openid.ax.value.group_as_member.2=Group-E-m.SNS-E.com

Therefore, the application website server may learn that the user b is a member of Group-C-a at an SNS-C and a member of Group-E-m on another SNS-E according to the above group identities.

The group information owned by the user or with the user as a member may be obtained through an OpenID attribute exchange method from the OP, and may be implemented through the OAuth Protocol. Specifically, the group information of the user is regarded as a protected resource, the application website server is a consumer, the OP storing the group information is a service provider server, and the application website server obtains the group information of the user from the OP through a process of the OAuth Protocol.

In this embodiment, the application website server may include resources not belonging to any private user, or resources authorized to be accessible to all people by a certain user, and the resources may be referred to as public resources. The resources belonging to a certain private user and accessible only after authorization are referred to private resources. The user may set resource access authorization for a group or an individual user. The user may authorize the self-owned groups and even groups of other trusted users as long as the application website server establishes an authorization setting record of a corresponding relation between the group identity provided by the user and the resources owned by the user.

The application website server may return user names of owners of private resources that the user b has authority to access to the user b, or return a private resource link list that the user b has authority to access to the user b. In this embodiment, the manner of returning the user names is mainly described. After the user b signs on the application website, some user names are displayed to the user b, and some resources of the users are set to be the resources that the user b may have the authority to access according to the group authorization, and in this manner, the user b may find more accessible resources, thereby improving the user experience.

In step 403, the application website server returns a user name link of the owners of the private resources that the user b has the authority to access.

The application website server may obtain the user name (for example, the user a) of the owner of the private resources that the user b has the authority to access by retrieving and comparing the group identity in the authorization setting record (for example, Group-C-a authorized by the user a) with the group identity (the group member includes the user b) obtained from the OP-B. A browser of the user b displays the returned user name link, and a user resource list may be accessed through the link.

Generally, the application website server does not need to return all the user names of the owners of the private resources that the user b has the authority to access at a time, because sometimes the amount may be large, and a part of user names may be returned for the first time according to the resource update time. In the returned private resources of the user names, the resources that the user b are allowed to access are updated recently, for example, new photos are added or location information changes. The resources not updated for a long time or not updated after the previous access of the user b may be returned after a subsequent request of the user b.

In step 404, the application website server receives a request of the resource list through a user name link by the user b.

In step 405, the application website server authenticates the group member identity of the user b. When the user b clicks the link to request to display the resource list of the resource owner, for example, the user a, the application website server authenticates the group member identity of the user b, and then displays the resource list of the user a that the user b has the authority to access after the authentication is successful.

Specifically, the application website server obtains the groups authorized by the user a and including the user b as a member according to a resource authorization setting record of the user a and the group information of the user b obtained from the OP, and requests the website server at which the groups are located to authenticate the member identity of the user b. For example, the website SNS-C of Group-C-a is requested to authenticate a member identity, that is, is requested to authenticate whether the user b is a member of Group-C-a.

If the application website server detects that another group of the user a may also include the member user b in addition to Group-C-a, and the user a also sets the resource access authorization for the groups on the application website server, the groups may be in different websites from Group-C-a, that is, not in the SNS-C, the application website server may perform the member identity authentication on another website. The application website server may authenticate the member identity of the user b in the groups one by one, then a union set of the resources that the user b has the authority to access corresponding to the groups passing the authentication is regarded as an accessible resource list of the user b. The application website server may synchronously send the authentication request to the websites of the groups.

If in the application website server, the user a not only performs the resource authorization on the groups, for example, Group-C-a, but also performs the resource authorization on the user b, the resources are also included in the above union set.

The application website server may use a safe HTTPS message to send the authentication request to the SNS-C. If the group information obtained by the application website server includes an authentication service address of the website of the group, the authentication request message may be directly sent to the authentication service address, and the message includes the group identity and the member identity.

The application website server may perform automatic finding according to the group identity (for example, the identity having an eXtensible Resource Identifier (XRI) format or a URL format) in the obtained group information, for example, as for the group identity having the URL format, the Yadis Protocol may be tried, the application website server obtains the authentication service address provided by the SNS-C of the group, and then sends the authentication request message to the authentication service address. The POST message of the HTTPS may be adopted to send the authentication request, and the returned response carries the authentication result.

In step 406, the application website server returns the resource list of the user a that the user b has the authority to access to the user b or rejects to provide the resource list. After the member identity authentication is successful, when the user b accesses specific resources in the resource list next time, the member identity authentication is not required any longer.

The group identity authentication performed through the website of the group, for example, the SNS-C has an advantage of preventing the member identity of the user b in Group-C-a from being falsified by the OP-B. Furthermore, a group notification mechanism cannot ensure that the group information on the website of the group, for example, the SNS-C can be updated to the OP-B in real time, so the group information data on the OP-B may be incorrect. Therefore, it is necessary to go to the website of the group, for example, the SNS-C to request to perform the group member identity authentication rather than that the application website server directly trusts and uses the group information of the user b obtained from the OP-B.

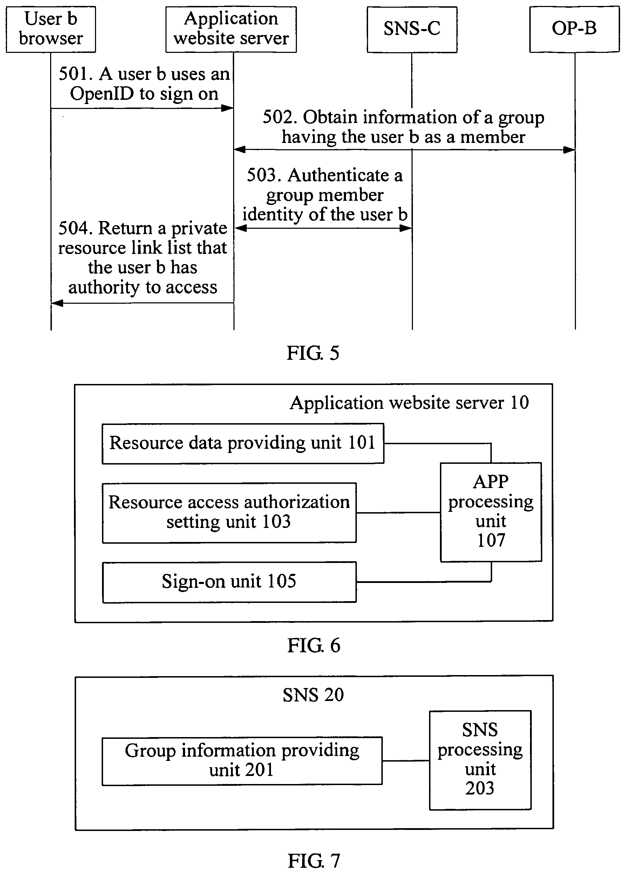

According to Embodiment 4 of the present invention, a manner that after a user b signs on an application website server, the application website server returns a private resource link list that the user b has authority to access to the user b. This manner is similar to the manner of returning a user name, but the user may directly see some private resource link lists. Furthermore, according to this embodiment, a manner that a member identity authentication is performed after the user b signs on may also be adopted; thereby enhancing the security. Referring to FIG 5, the following steps are included.

In step 501, the application website server accepts the user b to sign on by using an OpenID.

In step 502, the application website server obtains group information such as a group identity of the group having the user b as a member from an OP-B. In order to improve the efficiency of subsequent member identity authentication, the application website server may eliminate non-existent groups in authorization setting, that is, if no resource is authorized for a certain group, the application website server does not need to authenticate the member identity of the user b in the group. The application website server determines the identities of groups existing in the access authorization setting and having the user b as the member.

In step 503, the application website server authenticates the group member identity of the user b. The authentication of the group member identity may be performed on the determined groups. The determined groups may be in different websites, so the authentication request is performed on the groups one by one.

If a user a performs the access authorization on a resource and groups other than Group-C-a at the same time, and the user b is a member of a group, for example, Group-D-a, that is, the user b is the member of Group-C-a and the member of another group, for example, Group-D-a at the same time, after the application website server authenticates any one of the groups successfully, the user b is allowed to access the resource. For example, the application website server fails to authenticate the user b as the member of the Group-C-a, but successfully authenticates the user b as the member of Group-D-a, so the user b is still allowed to access the resource.

In step 504, the application website server returns the private resource link list that the user b has the authority to access to the user b. The user b may access the resources through the private resource link, and the group member identity authentication is not required any longer in subsequent access of resources.

Generally, the application website server does not need to return all the private resource links that the user b has the authority to access for the first time because the amount may be large, and a part of the private resource link list may be returned according to the resource update time. Alternatively, only the resources updated within a certain recent period of time may be returned, for example, the private resource links updated within one week are returned.

In addition to an OpenID manner to sign on, the user may also adopt a Single Sign-On (SSO). Usually, a website is used as an identity authentication server, and when the user signs on, the user is required to be authenticated through the identity authentication server, and after the authentication is successful, the user may access all mutually trusted websites, such as an SNS and the application website. The identity authentication server may store the group information of in a system of mutually trusted websites in a centralized manner. The identity authentication server is equivalent to an OP in the above embodiment; the difference is that the OP stores the group information of the user in a distributed manner. After the SSO of the user on any website, the website may directly determine an identity authentication server, and the OP is not required to be determined according to the user identity as in the OpenID manner. The rest processing is basically the same, and will not be described herein again.

As shown in FIG. 6, an application website server 10 provided in Embodiment 5 of the present invention includes a resource data providing unit 101, a resource access authorization setting unit 103, a sign-on unit 105, and an application (APP) processing unit respectively connected to the above units. The resource data providing unit 101 is configured to store the resource data uploaded by a user of the APP, such as photos, videos, website collection, reviews, journals, presence information or location information. The resource access authorization setting unit 103 is configured to store a resource access authorization record set by a resource providing user, in which the resource access authorization record provides a corresponding relation between an identity of an authorized group and the resources provided by a user a, for example, authorization data of the user a for Group-C-a, the resource data of the user a in the application website server that members of Group-C-a are allowed to access. The sign-on unit 105 is configured to receive the user to log on by using an OpenID through a browser, so as to authenticate the user identity. The APP processing unit 107 is configured to obtain the OpenID of the user from the sign-on unit 105, obtain the group information of the user from the OP, authenticate a group member identity of the user according to the group information, and provide resources for the user according to the authentication result and the resource access authorization record in the resource access authorization setting unit 103.

When the application website server 10 implements the method provided in Embodiment 1 of the present invention, referring to FIG. 2, the APP processing unit 107 implements the authentication of the group member identity of the user by authenticating a signature of the group information returned by the OP-B. When the application website server 10 implements the method provided in Embodiment 2 of the present invention, referring to FIG 3, the APP processing unit 107 authenticates the group member identity of the user at the same time through the group information of the user obtained from an SNS server SNS-C. When the application website server 10 implements the methods provided in Embodiments 3 and 4 of the present invention, referring to FIGs. 4 and 5, the APP processing unit 107 obtains the group member information of the user and then authenticates the group member identity of the user to the SNS server SNS-C. Therefore, the application website server may fully use the social data such as the group in the SNS to authenticate the resources of the user, thereby greatly facilitating the resource sharing of the user.

As shown in FIG. 7, an SNS server 20 provided in Embodiment 6 of the present invention includes a group information providing unit 201 and an SNS processing unit 203. The group information providing unit 201 is configured to store the group information of a user, in which the group information usually correspondingly includes a group identity and a member list, and the group identity is unique in a whole distributed socialized network, which may be ensured by including the group identity in a domain name of a website of the group. The group information may also include information such as a group name and description. The member list usually includes an OpenID and other information of the user. The SNS processing unit 203 is configured to correspondingly update the group information of the user stored by the group information providing unit 201 when a request for adding or deleting a member in the group is received, for example, add or delete an OpenID in a member list corresponding to the group; and is configured to obtain the group information of the corresponding user from the group information providing unit 201 when a request for querying the group information of the user is received, for example, a group identity of the group of the user; alternatively, is configured to authenticate a member identity of the user according to the corresponding relation between the group identity and the member list stored in the group information providing unit 201 when a request for authenticating the member identity of the user is received. Furthermore, the SNS processing unit may authenticate a user identity signature in the request first, and then provides the group information of the user after the authentication is successful. Therefore, the security is further enhanced, so as to prevent other users or a third party to personate the user to obtain the information whether the user belongs to a certain group. Generally, if the user signs on the application website by adopting an OpenID manner, an identity signature is generated after the successfully signing on, and then the identity signature of the user is carried in the request for obtaining the group information. In this way, the SNS may provide the group information of the user for the application website or an OP, so as to be used for authentication of the group identity of the user.

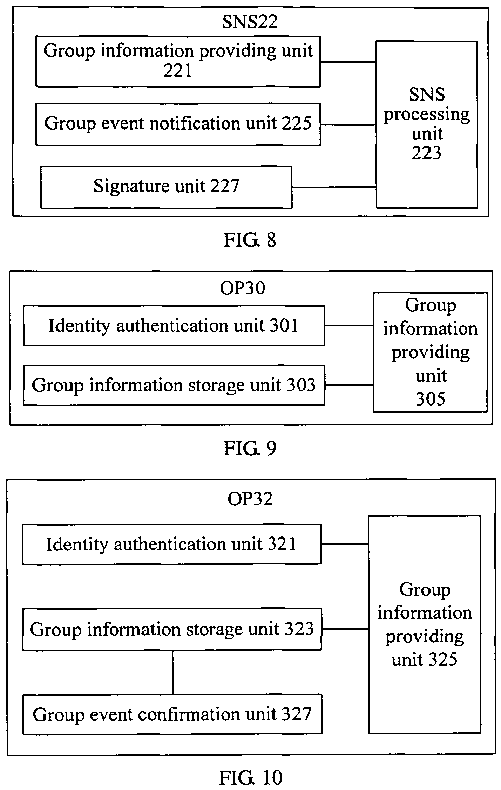

As shown in FIG. 8, an SNS server provided in Embodiment 7 of the present invention includes a group information providing unit 221, a group event notification unit 225, an SNS processing unit 223, and a signature unit 227. The group information providing unit 221 and the SNS processing unit 223 completely have the functions mentioned in Embodiment 6. Furthermore, when a group event of adding or deleting a member in a group occurs, the SNS processing unit 223 triggers the group event notification unit 225 to notify an OP of the member. The group event notification may include group event information such as an OpenID of the member, a group identity, and an event type. In other embodiments of the present invention, the group event notification may not include the specific group identity. In this way, the OP does not have to precisely learn which specific group the user belongs to as a member, so the SNS server does not need to notify the OP each time of adding or deleting a user member. Only when a user joins in all groups of the SNS server for the first time or when a user is deleted from all groups of the SNS server, the OP is notified. The signature unit 227 is configured to provide a signature for the group information when the SNS processing unit provides the group information of the user, so as to prevent the group information from being tampered during transmission, and authenticate the group information in a signature manner. Therefore, the SNS server may provide safe and reliable signed group information, so as to ensure the security of the distributed system.

As shown in FIG. 9, an OP 30 provided in Embodiment 8 of the present invention includes an identity authentication unit 301, a group information storage unit 303, and a group information providing unit 305 respectively connected to the above units. The identity authentication unit 301 is configured to authenticate the identity of a user through a received OpenID of the user. The group information storage unit 303 is configured to store the group information and various SNS data of the user, such as e-mail, birthday, gender, contacts, groups, websites corresponding to the groups, and identities of the groups of the user. In Embodiment 1, when the group information providing unit 305 receives a group event notification sent by an SNS-C, the group information of the corresponding user stored in the group information storage unit 303 is updated according to the group event notification. The group event includes the following fields: group_event_type, representing the type of the group event, member_id, representing an OpenID of the user, and optionally, group_host, representing an address of a website server of the group. When the OP 30 implements Embodiment 1 of the present invention, the group information providing unit 305 is further configured to request, from an SNS server SNS-C corresponding to the stored address of the website of the group, obtaining the group information of a user b when a request for obtaining the information of the group including the user b is received. When the OP 30 implements Embodiment 2 of the present invention, the group information providing unit 305 is further configured to provide information of a website of the group of the user b when a request for obtaining the information of the website of the group of the user b is received.

Furthermore, referring to FIG. 10, Embodiment 9 of the present invention provides an OP 32, where the function of an identity authentication unit 321 is same as that in Embodiment 8, and will not be described herein again. Furthermore, in this embodiment, the OP32 further includes a group event confirmation unit 327 connected to a group information providing unit 325, and the group event confirmation unit 327 is configured to update group information of a user corresponding to a group information storage unit 323 according to a group event notification when the group information providing unit 325 receives the group event notification. When a corresponding member signs on the OP next time, the group event confirmation unit 327 displays the received relevant notification to the group member and prompts the group member for confirmation. If the user does not trust the website, for example, the SNS-C, or believes that the SNS-C is malicious (for example, the SNS-C may be used for spreading advertisement information or maliciously track the activity of the user), the user may reject to perform the confirmation operation. After the group member performs the confirmation operation, the OP of the group member sets a confirmation mark for the SNS-C. If the user does not trust the SNS-C subsequently, the user may modify the confirmation mark into a rejection mark. The OP of the user only requests the website of the group confirmed by the user for obtaining the group information.

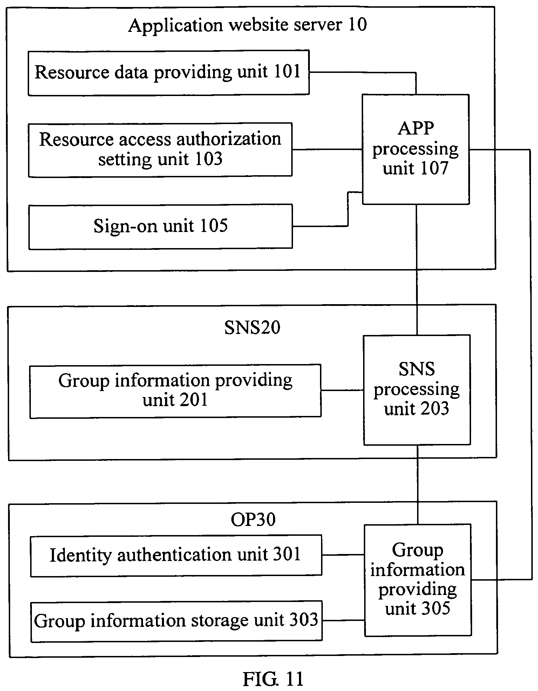

FIG 11 is an architectural diagram of a system for enabling a user to access application website server resources according to Embodiment 10 of the present invention. The application website server 10, the SNS sever 20, and the OP 30 are described in Embodiments 5, 6, and 8, and will not be described herein again. The APP processing unit 107, the SNS processing unit 203, and the group information providing unit 305 are connected to one another, so as to realize interactions of the application website server 10, the SNS server 20, and the OP 30. The system architecture is mainly configured to realize the methods provided in Embodiments 1 and 2 of the present invention.

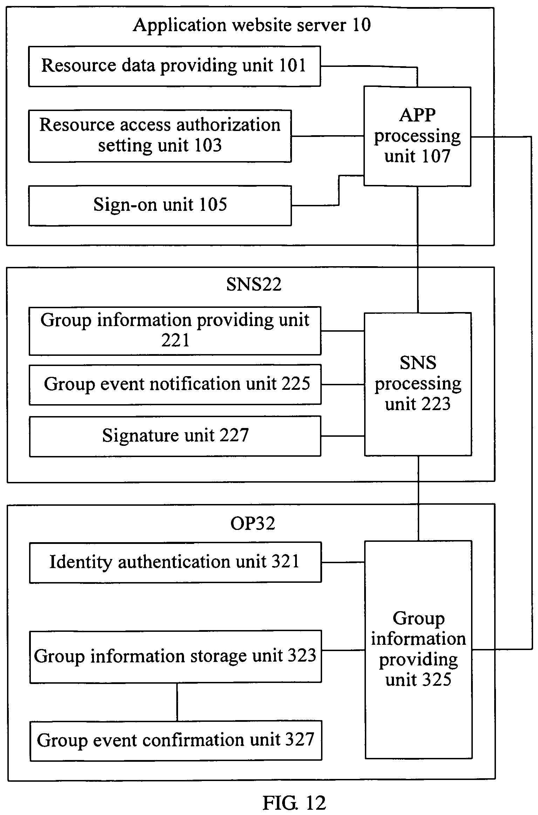

FIG 12 is an architectural diagram of a system for enabling a user to access application website server resources according to Embodiment 11 of the present invention. The application website server 10, the SNS sever 22, and the OP 32 are described in Embodiments 5, 7, and 9, and will not be described herein again. The APP processing unit 107, the SNS processing unit 223, and the group information providing unit 325 are connected to one another, so as to realize interactions of the application website server 10, the SNS server 22, and the OP 32. The system architecture is mainly used to implement the methods provided in Embodiments 1 and 2 of the present invention.

Persons of ordinary skill in the art should understand that all or a part of the steps in the method according to the embodiments of the present invention can be implemented by a program instructing relevant hardware, and the program may be stored in a computer readable storage medium. When the program is run, all or a part of the steps of the method according to the embodiments of the present invention are performed. The storage medium may be a Read Only Memory (ROM), a magnetic disk, an optical disk.

It will be apparent to those skilled in the art that various modifications and variations can be made to the present invention without departing from the scope of the invention. In view of the foregoing, it is intended that the present invention cover such modifications and variations of this invention provided they fall within the scope of the following claims and their equivalents.

## Claims

1. A method for providing resources for a user accessing an application website server, comprising:
accepting, by the application website server, a user to sign on by using an Open Identity, OpenID, through a browser,
determining, by the application website server, a corresponding OpenID Provider, OP, according to the OpenID of the user, wherein the OP of the user stores information of a website of a group having the user as a member;
requesting, from the OP of the user to an Social Network Site, SNS, obtaining the information of the group having the user as the member;
after the OP of the user obtains signed group information from the SNS of the group having the user as the member, receiving, by the application website server, the signed group information forwarded by the OP of the user;
authenticating, by the application website server, a group member identity of the user according to the group information; and
providing, by the application website server, resources for the user according to the authentication result.

2. The method according to claim 1, wherein when the user joins a group of the SNS for the first time or is completely deleted from a group of the SNS, the SNS sends a group event notification to the OP of the user; and
the OP of the user obtains the information of the SNS of the group having the user as the member according to the group event notification.

3. The method according to claim 1, wherein the OP of the user stores the group identity of the group having the user as the group member, and the group information of the user obtained from the OP of the user comprises the group identity and website information corresponding the group identity;
a user name link of an owner of the resource that the user has authority to access is determined according to the group identity obtained from the OP of the user and returned to the user browser;
a request for obtaining a resource list through the user name link by a user is received;
the SNS of the group is requested according to the group information to authenticate the group member identity of the user; and
the resource list corresponding to the user name link is returned to the user after the authentication is successful.

4. The method according to claim 3, wherein the step of the requesting the SNS of the group according to the group information to authenticate the group member identity of the user specifically comprises: obtaining the group identity of the group authorized by the user corresponding to the user name link and having the user as the member;
determining the SNS of the group according to the group identity; and
requesting the SNS of the group to authenticate the group member identity of the user.

5. The method according to any one of claims 1 to 4, wherein the providing the resources for the user according to the authentication result specifically comprises: obtaining the resource list that the user has the authority to access or the user name list of the owners of the resources by comparing the group identity in a resource access authorization record with the group identity in the group information obtained from the OP of the user; and returning the resource list or the user name list to the user.

6. An application website server, comprising:
a resource data providing unit, configured to store resources;
a resource access authorization setting unit, configured to store a resource access authorization record, wherein the resource access authorization record stores a corresponding relation between a group identity and the resources;
a sign-on unit, configured to receive sign-on information of a user comprising an identity of the user; and
an application, APP, processing unit, configured to obtain the group information of the user according to the identity of the user, wherein the group information is used for authenticating the group identity and providing the resources for the user according to the authentication result; wherein the sign-on information of the user received by the sign-on unit comprises an Open Identity, OpenID, of the user; and the APP processing unit obtains the group information of the user from a corresponding OpenID Provider, OP, according to the OpenID of the user, authenticates a group member identity of the user according to the group information, and provides the resources for the user according to the authentication result and the resource access authorization record; and
the step of the obtaining the group information of the user from the OP of the user comprises: requesting, from the OP of the user, obtaining the information of the group having the user as the member; and after the OP of the user obtains signed group information from the website of the group having the user as the member, receiving the signed group information forwarded by the OP of the user.

7. A system for accessing resources in a socialized network, comprising:
the application website server of claim 6, an OpenID Provider, OP, and a Social Network Site, SNS, server,
wherein the OP comprises:
a group information storage unit, configured to store the group information of the user; and
a group information providing unit, configured to return the group information of the user stored by the group information storage unit when a request for obtaining the group information of the user is received,
the SNS server comprises:
a group information providing unit, configured to store group information of a user; and
an SNS processing unit, configured to authenticate a member identity of the user according to the group information when a request for authenticating the member identity of the user is received,
wherein the SNS processing unit is further configured to update the group information of the user stored by the group information providing unit when a request for adding or deleting a member in the group is received, and obtain the group information of the corresponding user from the group information providing unit and return the group information to a requesting party when a request for querying the group information of the user is received.

## Patentansprüche

1. Verfahren zum Bereitstellen von Ressourcen für einen auf einen Anwendungswebsiteserver zugreifenden Benutzer, die folgenden Schritte umfassend:
Zulassen, durch den Anwendungswebsiteserver, dass sich ein Benutzer unter Verwendung einer "Open Identity", OpenID, über einen Browser anmeldet, Bestimmen, durch den Anwendungswebsiteserver, eines entsprechenden OpenID-Anbieters, OP, gemäß der OpenID des Benutzers, wobei der OP des Benutzers Websiteinformationen einer den Benutzer als ein Mitglied aufweisenden Gruppe speichert;
Anfordern, von dem OP des Benutzers bei einer "Social Network Site", SNS, eines Erhaltens der Informationen der den Benutzer als das Mitglied aufweisenden Gruppe;
nachdem der OP des Benutzers signierte Gruppeninformationen von der SNS der den Benutzer als das Mitglied aufweisenden Gruppe erhalten hat, Empfangen, durch den Anwendungswebsiteserver, der durch den OP des Benutzers weitergeleiteten signierten Gruppeninformationen;
Authentifizieren, durch den Anwendungswebsiteserver, einer Gruppenmitgliederidentität des Benutzers gemäß den Gruppeninformationen; und
Bereitstellen, durch den Anwendungswebsiteserver, von Ressourcen für den Benutzer gemäß dem Authentifikationsergebnis.

2. Verfahren nach Anspruch 1, wobei, wenn der Benutzer einer Gruppe der SNS erstmalig beitritt oder vollständig von einer Gruppe des SNS gelöscht ist, die SNS eine Gruppenereignisbenachrichtigung an den OP des Benutzers sendet; und
der OP des Benutzers die Informationen der SNS der den Benutzer als das Mitglied aufweisenden Gruppe gemäß der Gruppenereignisbenachrichtigung erhält.

3. Verfahren nach Anspruch 1, wobei der OP des Benutzers die Gruppenidentität der den Benutzer als das Gruppenmitglied aufweisenden Gruppe speichert und die von dem OP des Benutzers erhaltenen Gruppeninformationen des Benutzers die Gruppenidentität und der Gruppenidentität entsprechende Websiteinformationen umfassen;
ein Benutzernamenlink eines Eigners der Ressource, auf die zuzugreifen der Benutzer die Berechtigung hat, gemäß der von dem OP des Benutzers erhaltenen Gruppenidentität bestimmt wird und an den Benutzerbrowser zurückgegeben wird;
eine Anforderung zum Erhalten einer Ressourcenliste über den Benutzernamenlink durch einen Benutzer erhalten wird;
die SNS der Gruppe gemäß den Gruppeninformationen angefordert wird, um die Gruppenmitgliederidentität des Benutzers zu authentifizieren; und
die dem Benutzernamenlink entsprechende Ressourcenliste nach der erfolgreichen Authentifizierung an den Benutzer zurückgegeben wird.

4. Verfahren nach Anspruch 3, wobei der Schritt des Anforderns bei der SNS der Gruppe gemäß den Gruppeninformationen, um die Gruppenmitgliederidentität des Benutzers zu authentifizieren, insbesondere die folgenden Schritte umfasst: Erhalten der Gruppenidentität der durch den dem Benutzernamenlink entsprechenden Benutzer autorisierten und den Benutzer als das Mitglied aufweisenden Gruppe; Bestimmen der SNS der Gruppe gemäß der Gruppenidentität; und
Anfordern der SNS der Gruppe zum Authentifizieren der Gruppenmitgliederidentität des Benutzers.

5. Verfahren nach einem der Ansprüche 1 bis 4, wobei das Bereitstellen der Ressourcen für den Benutzer gemäß dem Authentifikationsergebnis insbesondere die folgenden Schritte umfasst: Erhalten der Ressourcenliste, auf die zuzugreifen der Benutzer die Berechtigung hat, oder der Benutzernamenliste der Eigner der Ressourcen durch Vergleichen der Gruppenidentität in einer Ressourcenzugriffsautorisierungsaufzeichnung mit der Gruppenidentität in den von dem OP des Benutzers erhaltenen Gruppeninformationen; und Zurückgeben der Ressourcenliste oder der Benutzernamenliste an den Benutzer.

6. Anwendungswebsiteserver, der Folgendes umfasst:
eine Ressourcendatenbereitstellungseinheit, die ausgelegt ist zum Speichern von Ressourcen;
eine Ressourcenzugriffsautorisierungseinstelleinheit, die ausgelegt ist zum Speichern einer Ressourcenzugriffsautorisierungsaufzeichnung, wobei die Ressourcenzugriffsautorisierungsaufzeichnung eine entsprechende Beziehung zwischen einer Gruppenidentität und den Ressourcen speichert;
eine Anmeldeeinheit, die ausgelegt ist zum Empfangen von Anmeldeinformationen eines Benutzers, umfassend eine Identität des Benutzers; und
eine Anwendungsverarbeitungseinheit bzw. APP-Verarbeitungseinheit, die ausgelegt ist zum Erhalten der Gruppeninformationen des Benutzers gemäß der Identität des Benutzers, wobei die Gruppeninformationen verwendet werden zum Authentifizieren der Gruppenidentität und zum Bereitstellen der Ressourcen für den Benutzer gemäß dem Authentifikationsergebnis; wobei die durch die Anmeldeeinheit empfangenen Anmeldeinformationen des Benutzers eine "Open Identity", OpenID, des Benutzers umfassen; und die APP-Verarbeitungseinheit die Gruppeninformationen des Benutzers von einem entsprechenden OpenID-Anbieter, OP, gemäß der OpenID des Benutzers erhält, eine Gruppenmitgliederidentität des Benutzers gemäß den Gruppeninformationen authentifiziert und die Ressourcen für den Benutzer gemäß dem Authentifikationsergebnis und der Ressourcenzugriffsautorisierungsaufzeichnung bereitstellt; und
der Schritt des Erhaltens der Gruppeninformationen des Benutzers von dem OP des Benutzers die folgenden Schritte umfasst: Anfordern, von dem OP des Benutzers, eines Erhaltens der Informationen der den Benutzer als das Mitglied aufweisenden Gruppe; und nachdem der OP des Benutzers signierte Gruppeninformationen von der Website der den Benutzer als das Mitglied aufweisenden Gruppe erhalten hat, Empfangen der durch den OP des Benutzers weitergeleiteten signierten Gruppeninformationen.

7. System zum Zugreifen auf Ressourcen in einem sozialen Netzwerk, das Folgendes umfasst:
den Anwendungswebsiteserver nach Anspruch 6, einen OpenID-Anbieter, OP, und einen Server einer "Social Network Site"bzw. einen SNS-Server,
wobei der OP Folgendes umfasst:
eine Gruppeninformationenspeichereinheit, die ausgelegt ist zum Speichern der Gruppeninformationen des Benutzers; und
eine Gruppeninformationenbereitstellungseinheit, die ausgelegt ist zum Zurückgeben der durch die Gruppeninformationenspeichereinheit gespeicherten Gruppeninformationen des Benutzers, wenn eine Anforderung zum Erhalten der Gruppeninformationen des Benutzers empfangen wird,
wobei der SNS-Server Folgendes umfasst:
eine Gruppeninformationenbereitstellungseinheit, die ausgelegt ist zum Speichern von Gruppeninformationen eines Benutzers; und
eine SNS-Verarbeitungseinheit, die ausgelegt ist zum Authentifizieren einer Mitgliederidentität des Benutzers gemäß den Gruppeninformationen, wenn eine Anforderung zum Authentifizieren der Mitgliederidentität des Benutzers empfangen wird,
wobei die SNS-Verarbeitungseinheit ferner ausgelegt ist zum Aktualisieren der durch die Gruppeninformationenbereitstellungseinheit gespeicherten Gruppeninformationen des Benutzers, wenn eine Anforderung zum Hinzufügen oder
Löschen eines Mitglieds in der Gruppe empfangen wird, und zum Erhalten der Gruppeninformationen des entsprechenden Benutzers von der Gruppeninformationenbereitstellungseinheit und zum Zurückgeben der Gruppeninformationen an eine anfordernde Partei, wenn eine Anforderung zum Abfragen der Gruppeninformationen des Benutzers empfangen wird.

## Revendications

1. Procédé pour fournir des ressources destinées à un utilisateur qui accède à un serveur de site web d'application, comprenant les étapes consistant à :
accepter, par le serveur de site web d'application, qu'un utilisateur se connecte en utilisant une identité ouverte, OpenID, par l'intermédiaire d'un navigateur, déterminer, par le serveur de site web d'application, un fournisseur d'OpenID, OP,
correspondant d'après l'OpenID de l'utilisateur, l'OP de l'utilisateur stockant les informations d'un site web d'un groupe ayant l'utilisateur comme membre ;
demander, à l'OP de l'utilisateur d'un site de réseau social, SNS, qu'il obtienne les informations du groupe ayant l'utilisateur comme membre ;
après que l'OP de l'utilisateur a obtenu des informations de groupe signées de la part du SNS du groupe ayant l'utilisateur comme membre, recevoir, par le serveur de site web d'application, les informations de groupe signées expédiées par l'OP de l'utilisateur ;
authentifier, par le serveur de site web d'application, une identité de membre de groupe de l'utilisateur d'après les informations de groupe ; et
fournir, par le serveur de site web d'application, des ressources destinées à l'utilisateur d'après le résultat de l'authentification.

2. Procédé selon la revendication 1, dans lequel, lorsque l'utilisateur se joint à un groupe du SNS pour la première fois ou qu'il est complètement supprimé d'un groupe du SNS, le SNS envoie une notification d'événement de groupe à l'OP de l'utilisateur ; et
l'OP de l'utilisateur obtient les informations du SNS du groupe ayant l'utilisateur comme membre d'après la notification d'événement de groupe.

3. Procédé selon la revendication 1, dans lequel l'OP de l'utilisateur stocke l'identité de groupe du groupe ayant l'utilisateur comme membre de groupe, et les informations de groupe de l'utilisateur obtenues de l'OP de l'utilisateur contiennent l'identité de groupe et des informations de site web correspondant à l'identité de groupe ;
un lien de nom d'utilisateur d'un propriétaire de la ressource à laquelle l'utilisateur est autorisé à accéder est déterminé d'après l'identité de groupe obtenue de l'OP de l'utilisateur et renvoyé au navigateur de l'utilisateur ;
une demande d'obtention d'une liste de ressources par un utilisateur, par l'intermédiaire du lien de nom d'utilisateur, est reçue ;
le SNS du groupe est demandé d'après les informations de groupe pour authentifier l'identité de membre de groupe de l'utilisateur ; et
la liste de ressources correspondant au lien de nom d'utilisateur est renvoyée à l'utilisateur après que l'authentification a réussi.

4. Procédé selon la revendication 3, dans lequel l'étape consistant à demander le SNS du groupe d'après les informations de groupe pour authentifier l'identité de membre de groupe de l'utilisateur comprend spécifiquement les étapes consistant à : obtenir l'identité de groupe du groupe autorisé par l'utilisateur correspondant au lien de nom d'utilisateur et ayant l'utilisateur comme membre ;
déterminer le SNS du groupe d'après l'identité de groupe ; et
demander au SNS du groupe d'authentifier l'identité de membre de groupe de l'utilisateur.

5. Procédé selon l'une quelconque des revendications 1 à 4, dans lequel la fourniture des ressources destinées à l'utilisateur d'après le résultat de l'authentification comprend spécifiquement les étapes consistant à : obtenir la liste de ressources à laquelle l'utilisateur est autorisé à accéder ou la liste de noms d'utilisateur des propriétaires des ressources en comparant l'identité de groupe présente dans un enregistrement d'autorisation d'accès aux ressources à l'identité de groupe présente dans les informations de groupe obtenues de l'OP de l'utilisateur ; et renvoyer la liste de ressources ou la liste de noms d'utilisateur à l'utilisateur.

6. Serveur de site web d'application, comprenant :
une unité de fourniture de données de ressource, conçue pour stocker des ressources ;
une unité de paramétrage d'autorisation d'accès aux ressources, conçue pour stocker un enregistrement d'autorisation d'accès aux ressources, l'enregistrement d'autorisation d'accès aux ressources stockant une relation correspondante entre une identité de groupe et les ressources ;
une unité de connexion, conçue pour recevoir des informations de connexion d'un utilisateur, contenant une identité de l'utilisateur ; et
une unité de traitement d'application, APP, conçue pour obtenir les informations de groupe de l'utilisateur d'après l'identité de l'utilisateur, les informations de groupe servant à authentifier l'identité de groupe et à fournir les ressources destinées à l'utilisateur d'après le résultat de l'authentification ; les informations de connexion de l'utilisateur reçues par l'unité de connexion contenant une identité ouverte, OpenID, de l'utilisateur ; et l'unité de traitement d'APP obtenant les informations de groupe de l'utilisateur de la part d'un fournisseur d'OpenID, OP, correspondant d'après l'OpenID de l'utilisateur, authentifiant une identité de membre de groupe de l'utilisateur d'après les informations de groupe, et fournissant les ressources destinées à l'utilisateur d'après le résultat de l'authentification et l'enregistrement d'autorisation d'accès aux ressources ; et
l'étape d'obtention des informations de groupe de l'utilisateur de la part de l'OP de l'utilisateur comprenant les étapes consistant à : demander, à l'OP de l'utilisateur, qu'il obtienne les informations du groupe ayant l'utilisateur comme membre ; et
après que l'OP de l'utilisateur a obtenu des informations de groupe signées de la part du site web du groupe ayant l'utilisateur comme membre, recevoir les informations de groupe signées expédiées par l'OP de l'utilisateur.

7. Système pour accéder à des ressources présentes dans un réseau social, comprenant :
le serveur de site web d'application selon la revendication 6, un fournisseur d'OpenID, OP, et un serveur de site de réseau social, SNS,
l'OP comprenant :
une unité de stockage d'informations de groupe, conçue pour stocker les informations de groupe de l'utilisateur ; et
une unité de fourniture d'informations de groupe, conçue pour renvoyer les informations de groupe de l'utilisateur stockées par l'unité de stockage d'informations de groupe lorsqu'une demande d'obtention des informations de groupe de l'utilisateur est reçue,
le serveur de SNS comprenant :
une unité de fourniture d'informations de groupe, conçue pour stocker des informations de groupe d'un utilisateur ; et
une unité de traitement de SNS, conçue pour authentifier une identité de membre de l'utilisateur d'après les informations de groupe lorsqu'une demande d'authentification de l'identité de membre de l'utilisateur est reçue,
l'unité de traitement de SNS étant également conçue pour mettre à jour les informations de groupe de l'utilisateur stockées par l'unité de fourniture d'informations de groupe lorsqu'une demande d'ajout d'un membre dans le groupe ou de suppression d'un membre du groupe est reçue, et obtenir les informations de groupe de l'utilisateur correspondant de la part de l'unité de fourniture d'informations de groupe et renvoyer les informations de groupe à un demandeur lorsqu'une demande d'interrogation des informations de groupe de l'utilisateur est reçue.
